(19) Europäisches Patentamt
European Patent Office
Office européen des brevets

(11) EP 1 847 812 B1

(12) EUROPEAN PATENT SPECIFICATION

(45) Date of publication and mention
of the grant of the patent:
**10.04.2013 Bulletin 2013/15**

(51) Int Cl.:
*G01F 1/34* (2006.01)          *G01F 1/00* (2006.01)
*G01F 1/50* (2006.01)          *G01F 15/02* (2006.01)

(21) Application number: 05703738.4

(86) International application number:
**PCT/JP2005/000501**

(22) Date of filing: **17.01.2005**

(87) International publication number:
**WO 2006/075406 (20.07.2006 Gazette 2006/29)**

(54) **FLOW RATE MEASURING METHOD AND FLOW RATE MEASURING DEVICE**

Durchflussmessverfahren und Durchflussmessgerät

PROCEDE DE MESURE DE DEBIT ET DISPOSITIF DE MESURE DE DEBIT

(84) Designated Contracting States:
**BE DE FR GB IT**

(43) Date of publication of application:
**24.10.2007 Bulletin 2007/43**

(73) Proprietor: **Tokyo Meter Co., Ltd.**
**Kanagawa 211-8577 (JP)**

(72) Inventors:
• **OGURA, Atsushi,**
**Tokyo Meter Co., Ltd.**
**Kawasaki-shi, Kawasaki-shi 211-8577 (JP)**

• **KOBAYASHI, Toshiya**
**Tokyo Meter Co., Ltd.**
**Kawasaki-shi, Kanagawa 211-8577 (JP)**

(74) Representative: **Appelt, Christian W.**
**Boehmert & Boehmert**
**Pettenkoferstrasse 20-22**
**80336 München (DE)**

(56) References cited:
WO-A-95/19549      DE-B- 1 145 815
FR-A- 2 767 206      JP-A- 2003 065 814
JP-B2- 3 312 346      US-A1- 2004 182 148

## Description

[TECHNICAL FIELD]

The present invention relates to a flow rate measuring method for measuring flow characteristics using an isothermalizing device and to a flow rate measuring apparatus.

[BACKGROUND ART]

Conventionally, as a method for obtaining flow characteristics of a fluid pressure component including a pneumatic component, such as a solenoid valve and a joint, used for a pneumatic passage, a method using an isothermal chamber has been known (see, for instance, Patent Document 1). According to the method, the isothermal chamber is interposed between a supply source of compressed air and the pneumatic component to be measured; a pressure response in the isothermal chamber is measured; an instantaneous flow rate of the compressed air is calculated by differentiating the pressure response; thereby obtaining the flow characteristics of the pneumatic component. Herein, the isothermal chamber is filled with a heat conductive material such as metal, the heat conductive material being formed in a woolly ball like shape with a tiny diameter. Hence, a contact area of the heat conductive material becomes large, realizing a high heat transfer coefficient. Accordingly, when the compressed air is flown into the isothermal chamber, a temperature in the isothermal chamber generally rises, because the inflow causes a rise in pressure. However, the rise in temperature can be suppressed, since the thus-generated heat energy is absorbed by the heat conductive material. On the other hand, when the compressed air is released, a pressure falls, because the release generally causes a fall in temperature. However, the temperature in the chamber is stabilized, since the heat conductive material provides heat. Owing to this mechanism, the temperature in the isothermal chamber can be stable, thereby realizing a speedy measurement of the flow rate.

Patent Document 1: Japanese Patent Publication No. 2887360

International patent application publication WO/9519549 discloses a method and an apparatus for determining the mass flow rate of a gas by a rate of change of pressure. A volumetric container is connected to the gas inlet to receive the gas. Positioned within the volumetric container is a heat conductive assembly for maintaining the interior of the system substantially isothermal during pressure changes of the gas as gas flows into or leaves the volumetric container.

[DISCLOSURE OF THE INVENTION]

[PROBLEMS TO BE SOLVED BY THE INVENTION]

In the above-explained calculating method of the flow characteristics using the isothermal chamber, the flow characteristics are calculated on an assumption that the temperature in the isothermal chamber is always isothermal. However, the temperature actually rises and falls, because the temperature significantly changes when the air is released from or flown into the isothermal chamber. Thus, the temperature in the isothermal chamber changes, so that the flow characteristics cannot be precisely measured at the times when the air is released from or flown into the chamber, particularly at beginnings of the inflow or the release of the air.
In order to more precisely isothermalize the temperature in the isothermal chamber, a filler made of a material having a high heat transfer coefficient may be used. However, trying to obtain sufficient precision by using such a material will result in a higher cost in the isothermal chamber, which is uneconomical.

An object of the present invention is to provide a flow rate measuring method and a flow rate measuring apparatus for highly precisely measuring flow characteristics of a fluid pressure component even when a rigorous isothermal state cannot be maintained in an isothermalizer.

[MEANS FOR SOLVING THE PROBLEMS]

A flow rate measuring method of the invention is a flow rate measuring method for measuring flow characteristics of a fluid pressure component by using an isothermalizer that suppresses temperature change of a fluid flowing therein. The flow rate measuring method includes: a temperature response deciding step in which the fluid is provided from the isothermalizer to the fluid pressure component to obtain a temperature response of the fluid in the isothermalizer relative to time a heat transfer coefficient calculating step in which a function of the heat transfer coefficient of the fluid relative to time is obtained based on the temperature response obtained in the temperature response deciding step; and a flow rate calculating step in which the flow rate of the fluid flowing in the fluid pressure component is calculated from the pressure response of the fluid relative to time using the function of the heat transfer coefficient obtained in the heat transfer coefficient calculating step.

According to the invention, the function of heat transfer coefficient of the fluid relative to time is calculated based on a temperature response of the fluid relative to time in the heat transfer coefficient calculating process. Specifically, the heat transfer coefficient is obtained by the function in which the temperature change in the isothermalizer is taken into account. Thereby, the flow rate of the fluid calculated in the flow rate calculating process is a value in which the temperature change in the isothermalizer is taken into account. Hence, even when the isothermal state cannot be rigidly maintained in the isothermalizer, the flow characteristics of the fluid pressure component can be precisely measured. Since the flow rate of the fluid is calculated in consideration for the temperature change in the isothermalizer, the isothermalizer does not need to have very high temperature change suppression ability. Thereby, an inexpensive isothermalizer can be employed, making the flow rate measuring apparatus inexpensive.

Generally, precisely measuring the temperature in an unsteady state is difficult, so that the temperature response of the fluid relative to time needs to be measured, for instance, after a lapse of a predetermined time and in a state where the inside of the isothermalizer is steady, complicating the measurement operation of the temperature response of the fluid and lengthening the measurement time. Contrary, in the present invention, by obtaining in advance the heat transfer coefficient of the fluid relative to time as the basic characteristics of the isothermalizer, only the pressure response of the fluid in the isothermalizer relative to time needs to be measured when actually measuring the flow rate in the fluid pressure component. The pressure response can be measured relatively easily and highly precisely, so that the measurement operation of the flow rate of the fluid pressure component can be simplified and the measurement time can be shortened.

According to the heat transfer coefficient calculating step of the invention, the function h(t) of the heat transfer coefficient may preferably be calculated by the following equation

$$[\text{Equation 1}] \quad h(t) = h_0 e^{-at},$$

where $h_0$ is the heat transfer coefficient at a maximum temperature drop; a is a correction factor; and t is time.

According to the invention, the function of the heat transfer coefficient can be simple, because the function of the heat transfer coefficient is set as an approximation expression by using, for instance, characteristics that the heat transfer coefficient of the fluid is substantially same when release speed of the fluid is in a certain range. Hence, the calculation in the heat transfer coefficient calculating process can be simple, while securing highly precise calculation in the flow rate calculating process.

According to the flow rate calculating step of the invention, a mass flow rate G of the fluid flowing in the fluid pressure component may preferably be calculated by the following equation

$$[\text{Equation 2}] \quad G = \frac{V}{R\theta_a} \bullet \frac{dP}{dt} + \frac{S_h \Delta\theta}{\theta_a C_p} \bullet h(t),$$

where P is the pressure of the fluid in the isothermalizer; V is the volume of the fluid in the isothermalizer; R is the gas constant; $\theta_a$ is the atmospheric temperature; $S_h$ is the heat transfer area of the isothermalizer; $C_p$ is the specific heat at constant pressure; and $\Delta\theta$ is the maximum temperature drop.

According to the invention, the arithmetic expression used in the flow rate calculating process has the right-hand side constructed of the first term that is an arithmetic expression for calculating the flow rate on the assumption that the temperature of the fluid in the isothermalizer is isothermal and the second term that is a correction term for the flow rate in a case that the temperature of the fluid in the isothermalizer is not isothermal. Thus, even when the isothermalizer does not sufficiently suppress the temperature change, the flow rate can be highly precisely measured by using the arithmetic expression.

Reversely, by calculating the flow rate using the arithmetic expression, the isothermalizer does not need to have very high temperature change suppression ability, so that an inexpensive isothermalizer can be employed, making the flow rate measuring apparatus inexpensive.

According to the temperature response deciding step of the invention, the temperature response of the fluid relative to time may preferably be obtained by: stopping the release of the fluid from the isothermalizer at predetermined intervals to measure the release-stop-time pressure in the isothermalizer at the time when the release of the fluid is stopped and an after-stabilization pressure in the isothermalizer after a lapse of a predetermined time; and obtaining the temperature of the fluid at the release stop time of the fluid from the release-stop-time pressure, the after-stabilization pressure and the atmospheric temperature.

Generally, the measurement of the temperature response of the fluid relative to time includes a measurement of the temperature of the fluid in an unsteady state, making the measurement of the temperature response of the fluid relative to time difficult. Additionally, such temperature measuring device is generally costly and securing sufficient precision with the temperature measuring device is also difficult. Further, the measurement of the average temperature in the isothermalizer requires measurements of the temperature at several measurement points, so that the composition of the temperature measuring device becomes complicated and obtaining sufficient precision in the measurement of the average temperature becomes difficult.

In the invention, the temperature measuring device is not necessary, because the release of the fluid is stopped at the predetermined intervals and the temperature response of the fluid is obtained by calculating the temperature from the measured pressure. Thus, the flow rate measuring apparatus can be inexpensive and a highly precise temperature response can be secured, because the pressure response can be relatively easily and highly precisely measured.

The flow rate measuring apparatus of the invention is a flow rate measuring apparatus for measuring flow characteristics of a fluid pressure component. The flow rate measuring apparatus includes: an isothermalizer that suppresses temperature change of a fluid flowing therein; a pressure detecting device that detects the pressure in the isothermalizer; and a computing unit that calculates the flow rate of the fluid flowing in the fluid pressure component from a pressure detection signal obtained by the pressure detecting device. The computing unit includes: a heat transfer coefficient computer that obtains the function of the heat transfer coefficient of the fluid relative to time based on the temperature response of the fluid in the isothermalizer relative to time at a time when the fluid is provided from the isothermalizer to the fluid pressure component; and a flow rate computer that calculates the flow rate of the fluid flowing in the fluid pressure component from a pressure response of the fluid relative to time using the function of the heat transfer coefficient obtained by the heat transfer coefficient computer.

According to the invention, the heat transfer coefficient computer obtains the functional heat transfer coefficient of the fluid relative to time based on the temperature response of the fluid relative to time. Specifically, the heat transfer coefficient is obtained by the function in which the temperature change in the isothermalizer is taken into account, so that the flow rate of the fluid calculated in the flow rate calculating process is also a value, in which the temperature change in the isothermalizer is taken into account. Hence, even when a rigid isothermal state cannot be maintained by the isothermalizer, the flow characteristics of the fluid pressure component can be precisely measured. Since the flow rate of the fluid is calculated in consideration for the temperature change in the isothermalizer, the isothermalizer does not need to have very high temperature change suppression ability. Thereby, an inexpensive isothermalizer can be employed, making the flow rate measuring apparatus inexpensive.

Generally, precisely measuring the temperature in an unsteady state is difficult, so that the temperature response relative to time needs to be measured, for instance, after a lapse of a predetermined time and in a state where the inside of the isothermalizer is steady, complicating the measurement operation of the temperature response and lengthening the measurement time. Contrary, in the present invention, by obtaining in advance the function of heat transfer coefficient relative to time as the basic characteristics of the isothermalizer, only the pressure response of the fluid relative to time in the isothermalizer needs to be measured when actually measuring the flow rate in the fluid pressure component. The pressure response can be measured relatively easily and highly precisely, so that the measurement operation of the flow rate of the fluid pressure component can be simplified and the measurement time can be shortened.

According to the invention, the heat transfer coefficient computer may preferably store the following equation as a function h(t) for obtaining the heat transfer coefficient of the fluid relative to time

$$[\text{Equation 3}] \quad h(t) = h_0 e^{-at},$$

where $h_0$ is a heat transfer coefficient at a maximum temperature drop; a is a correction factor; and t is time.

According to the invention, the function of the heat transfer coefficient can be simple, because the function of the heat transfer coefficient is set as an approximation expression by using, for instance, characteristics that the heat transfer coefficient of the fluid is substantially same when release speed of the fluid is in a certain range. Hence, the calculation in the heat transfer coefficient calculating process can be simple, while securing highly precise calculation in the flow rate calculating process.

According to the invention, the flow rate computer may preferably store the following equation for calculating the mass flow rate G of the fluid flowing in the fluid pressure component

[Equation 4]
$$G = \frac{V}{R\theta_a} \bullet \frac{dP}{dt} + \frac{S_h \Delta\theta}{\theta_a C_p} \bullet h(t) \quad ,$$

where P is the pressure of the fluid in the isothermalizer; V is the volume of the fluid in the isothermalizer; R is the gas constant; $\theta_a$ is the atmospheric temperature; $S_h$ is the heat transfer area of the isothermalizer; $C_p$ is a specific heat at constant pressure; and $\Delta\theta$ is the maximum temperature drop.

According to the invention, the arithmetic expression stored in the flow rate computer has the right-hand side constructed of the first term that is an arithmetic expression for calculating the flow rate on the assumption that the temperature in the isothermalizer is isothermal and the second term that is a correction term for the flow rate in a case that the temperature of the fluid in the isothermalizer is not isothermal. Thus, even when the isothermalizer does not sufficiently suppress the temperature change, the flow rate can be highly precisely measured by using the arithmetic expression.

Reversely, by calculating the flow rate using the arithmetic expression, the isothermalizer does not need to have very high temperature change suppression ability, so that an inexpensive isothermalizer can be employed, making the flow rate measuring apparatus inexpensive.

[BRIEF DESCRIPTION OF DRAWINGS]

Fig. 1 is a block diagram showing an arrangement of a measuring apparatus according to an embodiment of the invention;
Fig. 2 is a graph showing pressure responses relative to time according to an Example and First and Second Comparison Examples of the invention;
Fig. 3 is a graph showing temperature responses relative to time according to the Example and the Comparison Examples of the invention;
Fig. 4 is a graph showing flow characteristics according to the First Comparison Example of the invention;
Fig. 5 is a graph showing how a heat transfer coefficient changes according to the First Comparison Example of the invention;
Fig. 6 is a graph showing the flow characteristics according to the Comparison Examples of the invention;
Fig. 7 is a graph showing the flow characteristics according to the Example and the Comparison Examples of the invention; and
Fig. 8 is a table showing comparison results of the flow characteristics according to the Example and the Comparison Examples of the invention.

[EXPLANATION OF CODES]

1 ... flow rate measuring apparatus; 2 ... isothermal chamber (isothermalizer); 3 ... open/close valve; 5 ... pressure sensor (pressure detecting device); 6 ... controller (control device); 61 ... heat transfer coefficient computer; 62 ... flow rate computer; 63 ... flow characteristics computer; 100 ... test pneumatic component (fluid pressure component)

[BEST MODE FOR CARRYING OUT THE INVENTION]

An embodiment of the present invention will be described below with reference to the attached drawings.

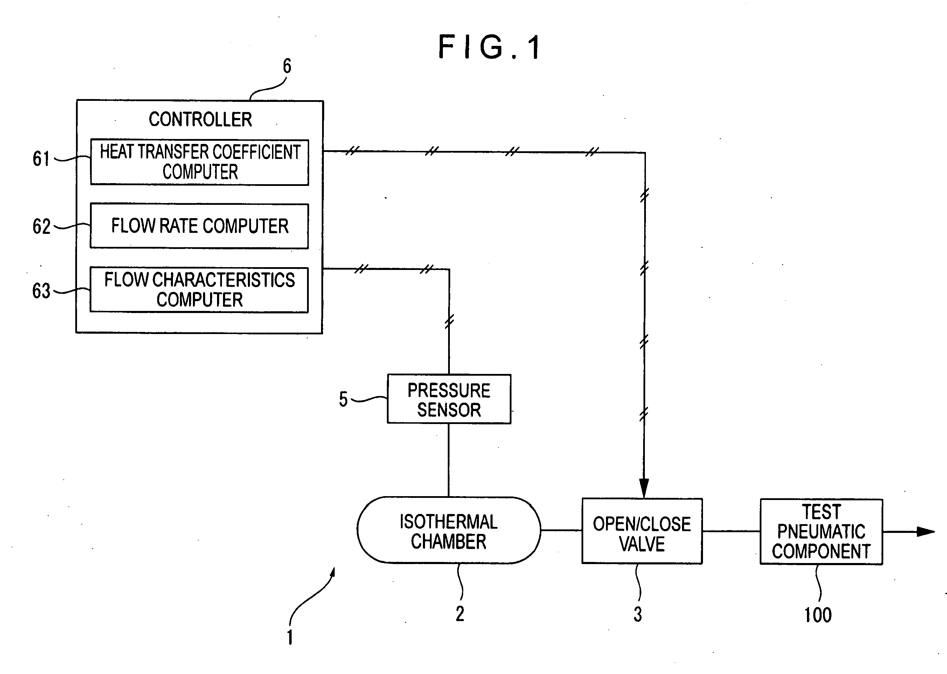

Fig. 1 is a block diagram showing an arrangement of a flow rate measuring apparatus 1 for using a flow rate measuring method according to the embodiment of the invention. As shown in Fig. 1, the flow rate measuring apparatus 1 is for measuring flow characteristics of a test pneumatic component 100 as a fluid pressure component, and includes an isothermal chamber 2 that provides the test pneumatic component 100 with compressed air as a fluid; an open/close valve 3 that is interposed between the isothermal chamber 2 and the test pneumatic component 100; a pressure sensor 5 as a pressure detecting device that measures internal pressure of the isothermal chamber 2; and a controller 6 as a control device that controls the flow rate measuring apparatus 1.

In the embodiment, the test pneumatic component 100 is a solenoid valve, which is a typical pneumatic component.
The isothermal chamber 2 is filled with compressed air of a predetermined pressure and a heat conductive material such as metal. The heat conductive material of the embodiment is formed in a woolly ball like shape with a tiny diameter such that a contact area of the material with the compressed air in the chamber becomes large in order to obtain a good heat transfer coefficient, and is filled in the chamber. Generally, when the compressed air is released from the isothermal chamber 2, the pressure in the chamber drops, decreasing the temperature in the chamber. However, since the heat conductive material provides heat energy, the temperature in the chamber can be maintained approximately isothermal. Still, since the pressure significantly drops at a beginning of the release of the compressed air, the temperature sometimes may not be rigidly isothermal.

The open/close valve 3 is provided so as to open/close a flow path connecting the isothermal chamber 2 and the test pneumatic component 100 and may be, for instance, a solenoid valve.

The pressure sensor 5 measures the pressure in the isothermal chamber 2 and outputs a pressure measurement signal to the controller 6. Since the pressure sensor 5 measures a pressure response in the isothermal chamber 2 at a time when the compressed air is released from the isothermal chamber 2, the pressure sensor 5 preferably has an excellent responsivity.

The controller 6 outputs an open/close command signal to the open/close valve 3, thereby opening or closing the flow path of the compressed air. The controller 6 also receives and stores the pressure measurement signal from the pressure sensor 5.

The controller 6 includes a heat transfer coefficient computer 61 that obtains a function of the heat transfer coefficient relative to time from the pressure measurement signal; a flow rate computer 62 that calculates the flow rate from the pressure response relative to time using the function of the heat transfer coefficient obtained by the heat transfer coefficient computer 61; and a flow characteristics computer 63 that calculates the flow characteristics of the test pneumatic component 100 based on the flow rate calculated by the flow rate computer 62. The heat transfer coefficient computer 61, the flow rate computer 62 and the flow characteristics computer 63 constitute a computing unit of the invention.

The heat transfer coefficient computer 61 stores the equation (1). The heat transfer coefficient computer 61 obtains the function h(t) of the heat transfer coefficient relative to time by the equation (1). Herein, $h_0$ is a heat transfer coefficient at a maximum temperature drop in a temperature response generated when the compressed air is provided from the isothermal chamber 2 to the test pneumatic component 100; $\Delta\theta$ is a maximum temperature drop; a is a correction factor; and t is time.

$$[\text{Equation 5}] \quad h(t) = h_0 e^{-at} \cdots (1)$$

The heat transfer coefficient h is calculated by the equation (2). Herein, $C_v$ is a specific heat at constant volume of air; P is a pressure in the isothermal chamber 2; V is a volume of the isothermal chamber 2; R is a gas constant; $\theta_a$ is an atmospheric temperature; $S_h$ is a heat transfer area of the isothermal chamber 2; $\theta_m$ is an average temperature in the isothermal chamber 2; and G is a mass flow rate of air.

$$[\text{Equation 6}] \quad h = \frac{C_v PV}{RS_h \theta_m (\theta_a - \theta_m)} \bullet \frac{d\theta}{dt} - \frac{R\theta}{S_h(\theta_a - \theta)} \bullet G \cdots (2)$$

The mass flow rate G is calculated by the equation (3) under a condition where air in the isothermal chamber 2 is in an ideal isothermal state, i.e., the temperature in the isothermal chamber 2 is equal to a room temperature.

$$[\text{Equation 7}] \quad G = \frac{V}{R\theta_a} \bullet \frac{dP}{dt} \cdots (3)$$

The flow rate computer 62 stores the equation (4). The flow rate computer 62 calculates the flow rate of the compressed air released from the isothermal chamber 2 by the equation (4). Herein, $C_p$ is a specific heat at constant pressure.

As is clear from a comparison between the equations (3) and (4), the first term of the right-hand side of the equation (4) is a derivative term for a pressure response, which is same as the right-hand side of the equation (3). In other words, the equation (4) is derived by being substituted with an energy equation in the isothermal chamber 2 at the time when the compressed air in the isothermal chamber 2 is released, and the first term of the right-hand side of the equation (4) is a computational expression of the flow rate under the condition where the temperature in the isothermal chamber 2 is in a steady state and air therein is in the ideal isothermal state, i.e., the temperature in the isothermal chamber 2 is equal to the room temperature. The second term of the right-hand side of the equation (4) is a correction term for the flow rate in a case where the temperature in the isothermal chamber 2 is not in the ideal isothermal state.

[Equation 8]
$$G = \frac{V}{R\theta_a} \bullet \frac{dP}{dt} + \frac{S_h \Delta\theta}{\theta_a C_p} \bullet h(t) \cdots (4)$$

The flow characteristics computer 63 stores the equations (5) and (6) below. The flow characteristics computer 63 calculates a sonic conductance C by the equation (5) and a critical pressure ratio b by the equation (6). Herein, $\rho_0$ is a reference density; $\theta_0$ is a reference temperature; $P_a$ is an atmosphere pressure; and $G^*$ is a mass flow rate in a choke state.

[Equation 9]
$$C = \frac{G}{\rho_0 P} \bullet \sqrt{\frac{\theta_a}{\theta_0}}, \frac{P_a}{P} < b \cdots (5)$$

$$b = 1 - \frac{\dfrac{P - P_a}{P}}{1 - \sqrt{1 - \left(\dfrac{G}{G^*}\right)^2}}, \frac{P_a}{P} \geq b \cdots (6)$$

The flow characteristics of the test pneumatic component 100 are measured using the above-explained flow rate measuring apparatus 1 in a flow rate measuring method that will be described below.

As a preparation for measuring the flow characteristics of the test pneumatic component 100, the following processes are conducted: a temperature response deciding process for obtaining the temperature response relative to time as basic characteristics of the isothermal chamber 2; and a heat transfer coefficient calculating process for obtaining the function of the heat transfer coefficient relative to time from the temperature response obtained by the temperature response deciding process.

In the temperature response deciding process, the average temperature in the isothermal chamber 2 relative to time at the time when the compressed air is released from the isothermal chamber 2 to the test pneumatic component 100 is measured, thereby measuring the temperature response relative to time.

In order to measure the average temperature in the isothermal chamber 2 in the temperature response deciding process, temperature distribution in the isothermal chamber 2 needs to be steady. Hence, the controller 6 outputs the open/close command signal to the open/close valve 34 at predetermined intervals to stop the release of the compressed air from the isothermal chamber 2 at predetermined intervals. The controller 6 also outputs a release-stop-time pressure measurement command signal to the pressure sensor 5 simultaneously with the open/close command signal. The pressure sensor 5 measures the pressure in the isothermal chamber 2 and outputs a pressure measurement signal to the controller 6 as a measurement signal of the release-stop-time pressure. The controller 6 also outputs an after-stabilization pressure measurement command signal to the pressure sensor 5 in a state where the pressure in the isothermal chamber 2 becomes stable and is stabilized after a lapse of a predetermined time from the output of the release-stop-time pressure measurement command signal. The pressure sensor 5 measures the pressure in the isothermal chamber 2 based on the after-stabilization pressure measurement command signal and outputs the pressure measurement signal to the controller 6 as a measurement signal of the after-stabilization pressure.

The controller 6 calculates the temperature in the isothermal chamber 2 from the release-stop-time pressure and the after-stabilization pressure output by the pressure sensor 5. Specifically, since the release-stop-time pressure and the after-stabilization pressure are measured in a state where the isothermal chamber 2 is sealed, a state equation is true between the state where the release-stop-time pressure is measured and the state where the after-stabilization pressure is measured. In the state where the pressure is stabilized, the temperature in the isothermal chamber 2 is equal to the atmospheric temperature (room temperature). Therefore, the temperature $\theta$ in the isothermal chamber 2 at the release stop time is obtained from the release-stop-time pressure, the after-stabilization pressure and the atmospheric temperature.

The temperature response relative to time can be determined by thus obtaining the temperature $\theta$ at the predetermined intervals. The controller 6 obtains the maximum temperature drop $\Delta\theta$ from the temperature response and calculates the heat transfer coefficient $h_0$ at the maximum temperature drop by the equations (2) and (3).

In a heat transfer calculating process, the heat transfer coefficient computer 61 calculates the function of the heat transfer coefficient relative to time by substituting the heat transfer coefficient $h_0$ at the maximum temperature drop into the equation (1).

By the function, the basic characteristics of heat transfer coefficient change at the time when the compressed air is released from the isothermal chamber 2 are obtained.

Next, a flow rate calculating process is conducted, in which the flow rate relative to time at the time when the compressed air is released from the isothermal chamber 2 to the test pneumatic component 100 is actually measured. In the flow rate calculating process, the function of the heat transfer coefficient relative to time calculated in the heat transfer coefficient calculating process is used as the basic characteristics of the isothermal chamber 2.

In the flow rate calculating process, the controller 6 outputs the pressure measurement command signal to the pressure sensor 5 at predetermined intervals, when the compressed air is released from the isothermal chamber 2 to the test pneumatic component 100. The pressure sensor 5 measures the pressure in the isothermal chamber 2 based on the pressure measurement command signal and outputs the pressure measurement signal to the controller 6.

The flow rate computer 62 receives the pressure measurement signal at the predetermined intervals and obtains the mass flow rate G of air by the equation (4). It should be noted that the flow rate of the compressed air released from the isothermal chamber 2 is the flow rate consumed by the test pneumatic component 100.

The flow characteristics computer 63 uses the flow rate G obtained by the flow rate computer 62 in order to obtain the sonic conductance C by the equation (5) and to calculate the critical pressure ratio b by the equation (6). Thereby, the flow characteristics of the test pneumatic component 100 can be obtained.

According to the embodiment as stated above, the following advantages can be obtained.

(1) Since the flow rate is calculated by the equation (4) in the flow rate calculating process, the flow characteristics can be precisely measured due to the correction in the flow rate by the second term of the right-hand side of the equation (4), even when the temperature in the isothermal chamber 2 is not rigidly maintained isothermal.

In addition, since the flow rate is calculated by the equation (4) and the flow characteristics can be precisely measured even when the temperature in the isothermal chamber 2 is not maintained isothermal, the heat conductive material filling the isothermal chamber 2 need not be a costly material, thereby making the flow rate measuring apparatus 1 inexpensive.

(2) In the flow rate calculating process, the flow rate is measured using the function of the heat transfer coefficient relative to time and the pressure response relative to time. In other words, the temperature response relative to time is not necessary in the equation (4) for calculating the flow rate. Hence, obtaining in advance the function of the heat transfer coefficient relative to time as the basic characteristics of the isothermal chamber 2 by, for instance, conducting a temperature response deciding process and the heat transfer coefficient calculating process can simplify the measurement operation and considerably shorten measurement time, because only the pressure response relative to time needs to be measured in the measurement of the flow characteristics of the test pneumatic component 100. Further, operation efficiency can be improved, because the temperature response relative to time, which requires relatively long measurement time, can be decided in advance.

(3) Generally, when the temperature relative to time needs to be measured, preparing a temperature measuring device having a sufficient responsivity is difficult and such temperature measuring device is costly. However, according to the temperature response deciding process of the embodiment, since the release of the compressed air in the isothermal chamber 2 is stopped at the predetermined intervals and to measure the pressure after the lapse of the predetermined time and the temperature is calculated from the measured pressure, the temperature measuring device need not be used. Consequently, the pressure sensor 5 for measuring the pressure response in the flow rate calculating process can be shared for obtaining the temperature response, thereby making the flow rate measuring apparatus 1 inexpensive. In addition, the temperature response is calculated by measuring the pressure not the temperature, so that the temperature response can be more precisely obtained.

Note that the scope of the present invention is not restricted to the above-described embodiment, but includes modifications and improvements as long as an object of the present invention can be achieved.

The fluid pressure component is not limited to the solenoid valve or to a component used for a compressed air passage, but may be any component used for a fluid such as nitrogen.

The isothermalizer of the embodiment is the isothermal chamber filled with the metal heat conductive material formed in a woolly ball like shape. However, the heat conductive material may not be of metal, but may be freely selected. In particular, according to the invention, since the flow rate is calculated using the function of the heat transfer coefficient relative to time, very high isothermalization capability need not be obtained by using a costly heat conductive material, so that an excellent measurement precision can be obtained even when employing inexpensive materials other than metal, of which thermal conductivities are lower than metal, or any other material. The heat conductive material filled in the isothermal chamber may not be the woolly ball like shape with a tiny diameter, but may be formed as a bundle of threads or fiber states or in any shape or dimension, provided that the contact area is large.

The isothermalizer may not have the arrangement in which the chamber is filled with the heat conductive material of the woolly ball like shape, but may have any other arrangement, provided that the fluid can flow inside the isothermalizer and the isothermalizer can maintain the temperature isothermal by absorbing the heat energy of the fluid or providing the heat energy accumulated therein.

In the temperature response deciding process according to the embodiment, the pressure sensor 5 measures the pressure in the isothermal chamber 2 at the release stop time and after the lapse of the predetermined time from the release stop time, but the pressure sensor 5 may continuously measure the pressure in order to measure the pressure response relative to time. In the temperature response deciding process, the temperature response relative to time may be obtained by a temperature detector, although precision thereof is not very good.

In the heat transfer coefficient calculating process, the function of the heat transfer coefficient may not use the equation (1), but may be any other arithmetic expression such as approximation and empirical expressions that have sufficient arithmetic precision.

In the flow rate calculating process, the above-described equation (4) may not be used for calculating the flow rate, but any other arithmetic expression such as approximation and empirical expressions that have sufficient arithmetic precision may be alternatively used.

[Example 1]

An Example of the present invention will be described below. In the Example, the flow characteristics of the test pneumatic component 100 were measured by the flow rate measuring apparatus 1 of the embodiment.

The volume of the isothermal chamber 2 was 4.9ℓ and a release-beginning pressure thereof was 0.6 Mpa. The isothermal chamber 2 was filled with a heat conductive material i.e. 0.75 kg of a copper wire with a diameter of $50\mu$m, and the weight filling rate was 0.150 kg/dm$^3$.

A solenoid valve, VT307-5G-01, was used as the test pneumatic component 100. The room temperature (atmospheric temperature $\theta_a$) was 28 degrees C.

In the temperature response deciding process, the release of the compressed air was stopped by closing the open/close valve 3 at intervals of 0.5 second counted from the start of the release of the compressed air in the isothermal chamber 2, and the release-stop-time pressure (release-stop-time pressure) and the pressure after the air in the isothermal chamber 2 had been left for a predetermined time to be stable (after-stabilization pressure) were measured by the pressure sensor 5, thereby obtaining the temperature at the release stop time in the isothermal chamber 2.

In the heat transfer coefficient calculating process, the heat transfer coefficient computer 61 calculated the function of the heat transfer coefficient relative to time using the equation (1). In the flow rate calculating process, the flow rate computer 62 calculated the flow rate G. In a flow characteristics calculating process, the flow characteristics computer 63 calculated the sonic conductance C and the critical pressure ratio b. The correction factor a was 1 in the equation (1).

[First Comparison Example]

A First Comparison Example of the invention will be described below. In the First Comparison Example, the flow rate measuring apparatus 1 was used to measure the flow characteristics of the test pneumatic component 100 in consideration that the temperature in the isothermal chamber 2 changes.

The controller 6 of the flow rate measuring apparatus 1 does not include the heat transfer coefficient computer. In the flow rate measuring apparatus 1, the release of the compressed air was stopped at the intervals (0.5 sec) and the pressure sensor 5 measured the pressure at the release stop time and the pressure after the stabilization in the same manner as the Example 1. Based on the measurements, the temperature response to pressure at the time when the compressed air was released from the isothermal chamber 2 was obtained, and the flow rate G of air was calculated by the flow rate computer 62 using the equation (7). The equation (7) is a flow rate computational expression in which temperature change in the isothermal chamber 2 is taken into account. Hence, it is conceivable that measurement results are relatively precise and in accordance with the state in the isothermal chamber 2.

The other conditions are the same as the Example.

$$[\text{Equation 10}] \qquad G = \frac{V}{R\theta_m} \bullet \frac{dP}{dt} - \frac{PV}{R\theta_m{}^2} \bullet \frac{d\theta_m}{dt} \cdots (7)$$

[Second Comparison Example]

A Second Comparison Example of the invention will be described below. In the Second Comparison Example, the flow rate measuring apparatus 1 was used to measure the flow characteristics of the test pneumatic component 100, assuming that the temperature in the isothermal chamber 2 was always isothermal.

The controller 6 of the flow rate measuring apparatus 1 does not include the heat transfer coefficient computer. The temperature in the isothermal chamber 2 is assumed to be always maintained isothermal. In the flow rate measuring apparatus 1, the pressure sensor 5 measured the pressure at the time when the compressed air was released from the isothermal chamber 2, and the flow rate computer 62 calculated the flow rate G using the above-described equation (3).

The other conditions are the same as the Example.

[Measurement Results of Example and Comparison Examples]

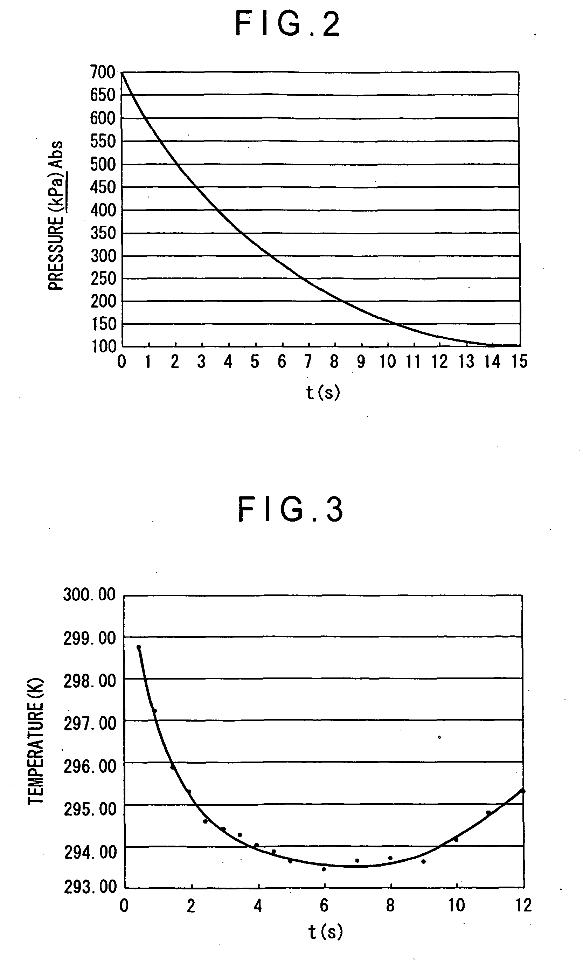

Fig. 2 shows the pressure response relative to time according to the Example, the First and Second Comparison Examples. Fig. 3 shows the temperature response relative to time according the Example, the First and Second Comparison Examples. As shown in Figs. 2 and 3, the temperature in the isothermal chamber 2 rapidly falls when the compressed air is released from the isothermal chamber 2, and rises again due to the heat energy provided by the heat conductive material filling the chamber.

Thus, the isothermal state cannot be maintained even when the isothermal chamber 2 is used, because the temperature falls immediately after the release of the compressed air starts. From the Fig. 3, the maximum temperature drop $\Delta\theta$ is obtained by calculating a difference between the maximal value and the minimum value. The heat transfer coefficient at the minimum value of the temperature is the heat transfer coefficient $h_0$ at the maximum temperature drop.

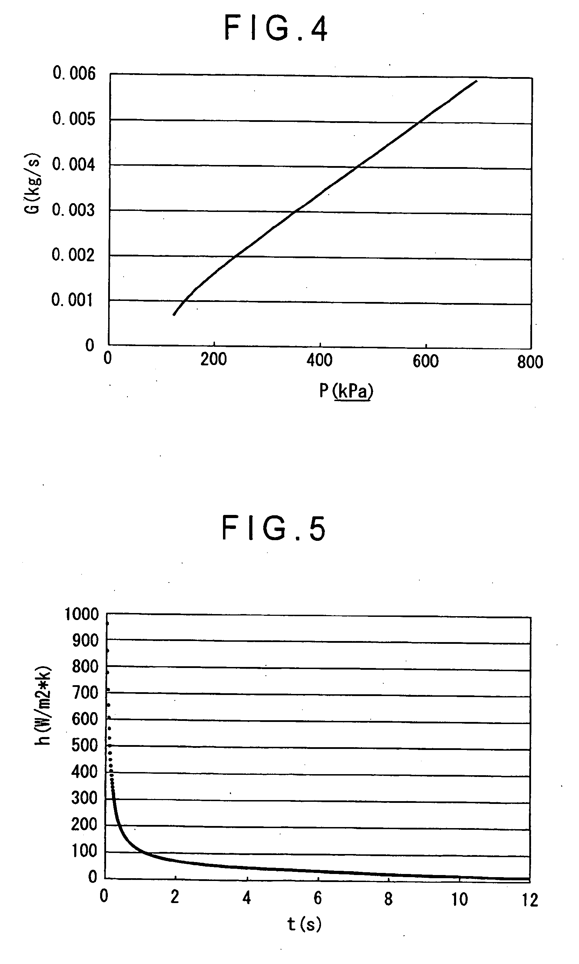

Fig. 4 shows the flow characteristics according to the First Comparison Example.

Fig. 5 shows the heat transfer coefficient relative to time according to the First Comparison Example. As shown in Fig. 4, the pressure in the isothermal chamber 2 and the flow rate G of the test pneumatic component 100 fall as the compressed air is released from the isothermal chamber 2. As shown in Fig. 5, the heat transfer coefficient is very high at the beginning of the release of the compressed air from the isothermal chamber 2, but rapidly falls as the time passes.

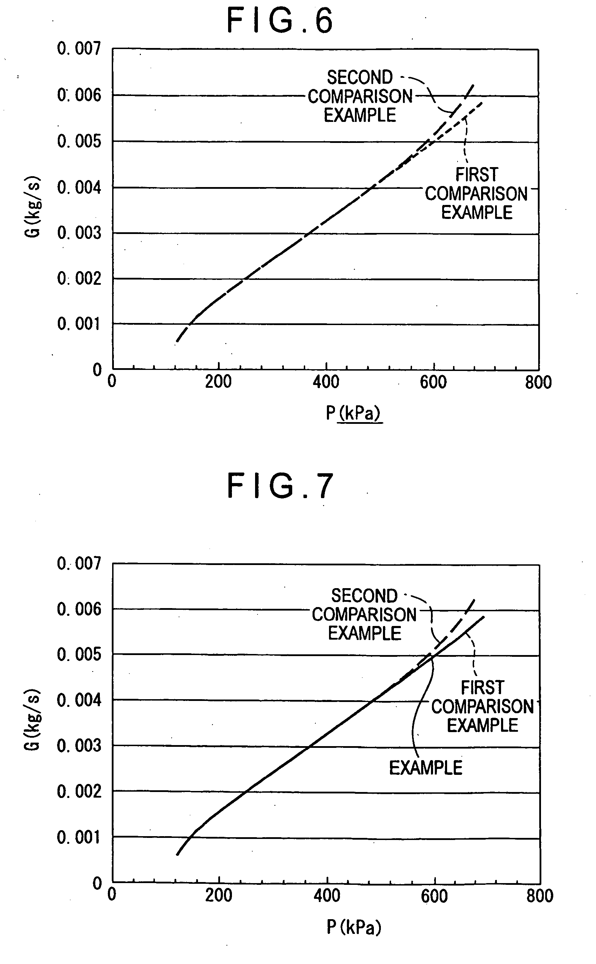

Fig. 6 shows the flow characteristics of the First and Second Comparison Examples. As shown in Fig. 6, the temperature of the Second Comparison Example rapidly falls in a range from the beginning of the release of the compressed air from the isothermal chamber 2 to a point where the pressure becomes approximately 500 kPa, so that the flow characteristics of the Second Comparison Example in the range largely differs from the flow characteristics of the First Comparison Example.

Subsequently, the temperature in the isothermal chamber 2 becomes stable due to the heat energy provided by the heat conductive material in the isothermal chamber 2, so that the flow characteristics of the First and Second Comparison Examples are roughly the same in a range in which the pressure is or below approx. 500 kPa.

Note that, a thermal conductivity in the isothermal chamber 2 hardly changes, when the release rate of the compressed air is about 100 kPa/s at maximum pressure drop.

Fig. 7 shows the flow characteristics of the First and Second Comparison Examples and the Example. As shown in Fig. 7, the flow characteristics of the Example are substantially the same as the First Comparison Example in the whole pressure range. Note that, only the solid line indicating the flow characteristics of the Example is apparently shown in Fig. 7, but a dotted line indicating the flow characteristics of the First Comparison Example overlaps with the solid line indicating the flow characteristics of the Example.

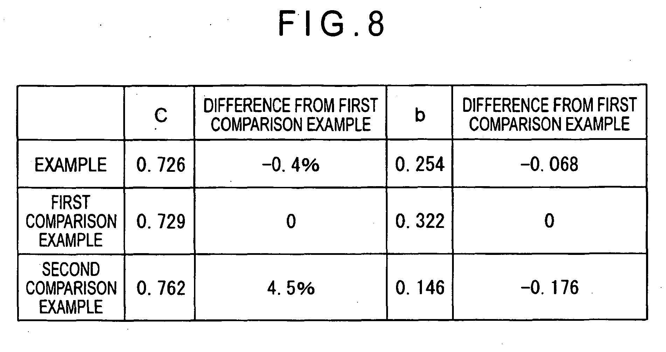

Fig. 8 is a table showing comparison results of the First and Second Comparison Examples and the Example. In Fig. 8, the sonic conductance C and the critical pressure ratio b that indicates the flow characteristics of the First and Second Comparison Examples and the Example are obtained to make a comparison with each other. As shown in Fig. 8, when the First Comparison Example is the reference, a sonic conductance C error is -0.4% between the First Comparison Example and the Example and 4.5% between the First and Second Comparison Examples. Thus, it is conceivable that the measurement is conducted more precisely in the Example than in the First Comparison Example.
As for the critical pressure ratio b, in the comparison with the First Comparison Example, the Example has an error of -0.068, while the Second Comparison Example has an error of -0.176. These results also indicate that the measurement is conducted more precisely in the Example than in the First Comparison Example.

Here, the measuring methods according to the Example and the First Comparison Example are compared. The method of the First Comparison Example requires measurement values of the pressure response relative to time and the temperature response corresponding to the pressure response. Hence, it is required in an actual measurement to calculate the temperature in the isothermal chamber 2 after the air in the isothermal chamber 2 is stabilized by stopping the release of the compressed air at the predetermined intervals, thereby complicating the measurement operation and lengthening the measurement time.
In contrast, the measuring method of the Example only requires the measurement of the pressure response relative to time in an actual measurement, provided that the function of the heat transfer coefficient relative to time has been previously obtained as the basic characteristics of the isothermal chamber 2. Unlike the measurement of the temperature response, the measurement of the pressure response does not require stopping the release of the compressed air at the predetermined intervals to stabilize the temperature, but can be conducted relatively precisely during the release of the compressed air. Therefore, the measuring method of the Example can considerably shorten the measurement time of the flow characteristics.
As stated above, the validity of the measurement of the flow characteristics according to the measuring method of the Example has been confirmed, and the benefits of the present invention have been proved.

[INDUSTRIAL APPLICABILITY]

The present invention can be utilized for measuring flow characteristics of a pneumatic component such as a solenoid valve as well as for measuring flow characteristics of a fluid pressure component used for an arbitrary fluid.

**Claims**

1.  A flow rate measuring method for measuring flow characteristics of a fluid pressure component (100) by using an isothermalizer (2) that suppresses temperature change of a fluid flowing therein, comprising:

    a temperature response deciding step, in which the fluid is provided from the isothermalizer to the fluid pressure component (100) to obtain a temperature response of the fluid in the isothermalizer relative to time;
    a heat transfer coefficient calculating step, in which a function of the heat transfer coefficient of the fluid relative to time is obtained based on the temperature response obtained in the temperature response deciding step; and
    a flow rate calculating step, in which the flow rate of the fluid flowing in the fluid pressure component (100) is calculated from the pressure response of the fluid relative to time using the function of the heat transfer coefficient obtained in the heat transfer coefficient calculating step.

2.  The flow rate measuring method according to claim 1, wherein in the heat transfer coefficient calculating step, the function h(t) of the heat transfer coefficient is calculated by the equation $h(t) = h_0 e^{-at}$, where $h_0$ is the heat transfer coefficient at a maximum temperature drop; a is a correction factor; and t is time.

3.  The flow rate measuring method according to claim 2, wherein in the flow rate calculating step, the mass flow rate G of the fluid flowing in the fluid pressure component is calculated by the equation

$$G = \frac{V}{R\theta_a} \bullet \frac{dP}{dt} + \frac{S_h \Delta\theta}{\theta_a C_p} \bullet h(t)$$

, where P is the pressure of the fluid in the isothermalizer; V is the volume of the fluid in the isothermalizer; R is the gas constant; $\theta_a$ is the atmospheric temperature; $S_h$ is the heat transfer area of the isothermalizer; $C_p$ is a specific heat at constant pressure; and $\Delta\theta$ is the maximum temperature drop.

4. The flow rate measuring method according to any of claims 1 to 3, wherein in the temperature response deciding step, the temperature response of the fluid relative to time is obtained by: stopping the release of the fluid from the isothermalizer (2) at predetermined intervals to measure the release-stop-time pressure in the isothermalizer at the time when the release of the fluid is stopped and an after-stabilization pressure in the isothermalizer after a lapse of a predetermined time; and obtaining the temperature of the fluid at the release stop time of the fluid from the release-stop-time pressure, the after-stabilization pressure and the atmospheric temperature.

5. A flow rate measuring apparatus (1) for measuring flow characteristics of a fluid pressure component (100), comprising:

   an isothermalizer (2) that suppresses temperature change of a fluid flowing therein;
   a pressure detecting device (5) that detects the pressure in the isothermalizer; and
   a computing unit (6) that calculates the flow rate of the fluid flowing in the fluid pressure component (100) from a pressure detection signal obtained by the pressure detecting device, **characterised in that**
   the computing unit includes: a heat transfer coefficient computer (61) that obtains the function of the heat transfer coefficient of the fluid relative to time based on the temperature response of the fluid in the isothermalizer relative to time at a time when the fluid is provided from the isothermalizer to the fluid pressure component; and a flow rate computer (62) that calculates the flow rate of the fluid flowing in the fluid pressure component (100) from a pressure response of the fluid relative to time using the function of the heat transfer coefficient obtained by the heat transfer coefficient computer.

6. The flow rate measuring apparatus according to claim 5, wherein the heat transfer coefficient computer stores as the function h(t) for obtaining the heat transfer coefficient of the fluid relative to time the equation $h(t) = h_0 e^{-at}$, where $h_0$ is heat transfer coefficient at the maximum temperature drop; a is a correction factor; and t is time.

7. The flow rate measuring apparatus according to claim 6, wherein the flow rate computer stores the equation

$$G = \frac{V}{R\theta_a} \bullet \frac{dP}{dt} + \frac{S_h \Delta\theta}{\theta_a C_p} \bullet h(t)$$ for calculating the mass flow rate G of the fluid flowing in the fluid pressure component, where P is the pressure of the fluid in the isothermalizer; V is the volume of the fluid in the isothermalizer; R is the gas constant; $\theta_a$ is the atmospheric temperature; $S_h$ is the heat transfer area of the isothermalizer; $C_p$ is a specific heat at constant pressure; and $\Delta\theta$ is the maximum temperature drop.

## Patentansprüche

1. Durchflussmengen-Messverfahren zum Messen von Fließeigenschaften eines Fluiddruckteils (100) unter Verwendung eines Isothermalizers (2), der die Temperaturänderung eines darin fließenden Fluids unterdrückt, mit den folgenden Schritten:

   einem Temperaturverhalten-Ermittlungsschritt, in dem das Fluid von dem Isothermalizer (2) für das Fluiddruckteil (100) bereitgestellt wird, um das Temperaturverhalten des Fluids in dem Isothermalizer (2) in Abhängigkeit von der Zeit zu ermitteln;
   einem Wärmeübergangszahl-Berechnungsschritt, in dem eine Funktion der Wärmeübergangszahl des Fluids in Abhängigkeit von der Zeit auf Grund des Temperaturverhaltens ermittelt wird, das in dem Temperaturverhalten-Ermittlungsschritt ermittelt worden ist; und
   einem Durchflussmengen-Berechnungsschritt, in dem die Durchflussmenge des in dem Fluiddruckteil (100) fließenden Fluids aus dem Druckverhalten des Fluids in Abhängigkeit von der Zeit unter Verwendung der Funktion der Wärmeübergangszahl berechnet wird, die in dem Wärmeübergangszahl-Berechnungsschritt ermittelt worden ist.

2. Durchflussmengen-Messverfahren nach Anspruch 1, **dadurch gekennzeichnet, dass** in dem Wärmeübergangszahl-Berechnungsschritt die Funktion h(t) der Wärmeübergangszahl mit der Gleichung $h(t) = h_0 e^{-at}$ berechnet wird, wobei $h_0$ die Wärmeübergangszahl bei einem maximalen Temperaturabfall ist, a ein Korrekturfaktor ist und t die Zeit ist.

**3.** Durchflussmengen-Messverfahren nach Anspruch 2, **dadurch gekennzeichnet, dass** in dem Durchflussmengen-Berechnungsschritt der Mengendurchfluss G für das in dem Fluiddruckteil (100) fließende Fluid mit der folgenden Gleichung berechnet wird:

$$G = \frac{V}{R\theta_a} \bullet \frac{dP}{dt} + \frac{S_h \Delta\theta}{\theta_a C_p} \bullet h(t) \quad ,$$

wobei P der Druck des Fluids in dem Isothermalizer ist, V das Volumen des Fluids in dem Isothermalizer ist, R die Gaskonstante ist, $\theta_a$ die atmosphärische Temperatur ist, $S_h$ die Wärmeübertragungsfläche des Isothermalizers ist, $C_p$ die spezifische Wärmekapazität bei einem konstanten Druck ist und $\Delta\theta$ der maximale Temperaturabfall ist.

**4.** Durchflussmengen-Messverfahren nach einem der Ansprüche 1 bis 3, **dadurch gekennzeichnet, dass** in dem Temperaturverhalten-Ermittlungsschritt das Temperaturverhalten des Fluids in Abhängigkeit von der Zeit mit den folgenden Schritten ermittelt wird:

Unterbrechen des Ablassens des Fluids aus dem Isothermalizer (2) in festgelegten Abständen, um den Ablass-Unterbrechungszeitpunkt-Druck in dem Isothermalizer zu dem Zeitpunkt, zu dem das Ablassen des Fluids unterbrochen wird, und einen Druck nach der Stabilisierung in dem Isothermalizer nach dem Verstreichen einer festgelegten Zeit zu messen; und
Ermitteln der Temperatur des Fluids zum Zeitpunkt der Unterbrechung des Ablassens des Fluids aus dem Ablass-Unterbrechungszeitpunkt-Druck, dem Druck nach der Stabilisierung und der atmosphärischen Temperatur.

**5.** Durchflussmengen-Messvorrichtung (1) zum Messen von Fließeigenschaften eines Fluiddruckteils (100), mit:

einem Isothermalizer (2), der die Temperaturänderung eines darin fließenden Fluids unterdrückt;
einem Druckdetektionsgerät (5), das den Druck in dem Isothermalizer (2) detektiert; und
einer Recheneinheit (6), die die Durchflussmenge des in dem Fluiddruckteil (100) fließenden Fluids aus einem Druckdetektionssignal berechnet, das mit dem Druckdetektionsgerät (5) erhalten worden ist,

**dadurch gekennzeichnet, dass** die Recheneinheit (6) Folgendes aufweist:

einen Wärmeübergangszahl-Computer (61), der die Funktion der Wärmeübergangszahl des Fluids in Abhängigkeit von der Zeit auf Grund des Temperaturverhaltens des Fluids in dem Isothermalizer (2) in Abhängigkeit von der Zeit zu einem Zeitpunkt ermittelt, zu dem das Fluid von dem Isothermalizer (2) für das Fluiddruckteil (100) bereitgestellt wird; und
einen Durchflussmengen-Computer (62), der die Durchflussmenge des in dem Fluiddruckteil (100) fließenden Fluids aus dem Druckverhalten des Fluids in Abhängigkeit von der Zeit unter Verwendung der Funktion der Wärmeübergangszahl berechnet, die von dem Wärmeübergangszahl-Computer ermittelt worden ist.

**6.** Durchflussmengen-Messvorrichtung nach Anspruch 5, **dadurch gekennzeichnet, dass** der Wärmeübergangszahl-Computer (61) als die Funktion h(t) zum Ermitteln der Wärmeübergangszahl des Fluids in Abhängigkeit von der Zeit die Gleichung $h(t) = h_0 e^{-at}$ speichert, wobei $h_0$ die Wärmeübergangszahl bei dem maximalen Temperaturabfall ist, a ein Korrekturfaktor ist und t die Zeit ist.

**7.** Durchflussmengen-Messvorrichtung nach Anspruch 6, **dadurch gekennzeichnet, dass** der Durchflussmengen-Computer (62) die folgende Gleichung zum Berechnen des Mengendurchflusses G für das in dem Fluiddruckteil (100) fließende Fluid speichert:

$$G = \frac{V}{R\theta_a} \bullet \frac{dP}{dt} + \frac{S_h \Delta\theta}{\theta_a C_p} \bullet h(t) \quad ,$$

wobei P der Druck des Fluids in dem Isothermalizer ist, V das Volumen des Fluids in dem Isothermalizer ist, R die

Gaskonstante ist, $\theta_a$ die atmosphärische Temperatur ist, $S_h$ die Wärmeübertragungsfläche des Isothermalizers ist, Cp die spezifische Wärmekapazität bei einem konstanten Druck ist und $\Delta\theta$ der maximale Temperaturabfall ist.

**Revendications**

1.  Procédé de mesure de débit pour mesurer les caractéristiques d'écoulement d'un composant de pression de fluide (100) en utilisant un isothermaliseur (2) qui supprime la variation de température d'un fluide circulant dans celui-ci, comprenant :

    une étape de décision de réponse en température, à laquelle le fluide est fourni de l'isothermaliseur au composant de pression de fluide (100) pour obtenir une réponse en température du fluide dans l'isothermaliseur par rapport au temps ;
    une étape de calcul de coefficient de transfert thermique, à laquelle une fonction du coefficient de transfert thermique du fluide par rapport au temps est obtenue sur la base de la réponse en température obtenue à l'étape de décision de réponse en température ; et
    une étape de calcul de débit, à laquelle le débit du fluide circulant dans le composant de pression de fluide (100) est calculé à partir de la réponse en pression du fluide par rapport au temps en utilisant la fonction du coefficient de transfert thermique obtenue à l'étape de calcul de coefficient de transfert thermique.

2.  Procédé de mesure de débit selon la revendication 1, dans lequel, à l'étape de calcul de coefficient de transfert thermique, la fonction h(t) du coefficient de transfert thermique est calculée par l'équation $h(t) = h_0 e^{-at}$, où $h_0$ est le coefficient de transfert thermique à une chute de température maximum ; a est un facteur de correction ; et t est le temps.

3.  Procédé de mesure de débit selon la revendication 2, dans lequel, à l'étape de calcul de débit, le débit massique G du fluide circulant dans le composant de pression de fluide est calculé par l'équation

    $$G = \frac{V}{R\theta_a} \bullet \frac{dP}{dt} + \frac{S_h \Delta\theta}{\theta_a C_p} \bullet h(t)$$

    où P est la pression du fluide dans l'isothermaliseur ; V est le volume du fluide dans l'isothermaliseur ; R est la constante du gaz ; $\theta_a$ est la température atmosphérique ; $S_h$ est l'aire de transfert thermique de l'isothermaliseur ; $C_p$ est une chaleur spécifique à pression constante ; et $\Delta\theta$ est la chute de température maximum.

4.  Procédé de mesure de débit selon l'une quelconque des revendications 1 à 3, dans lequel, à l'étape de décision de réponse en température, la réponse en température du fluide par rapport au temps est obtenue en : arrêtant la libération du fluide de l'isothermaliseur (2) à des intervalles prédéterminés pour mesurer la pression à l'instant d'arrêt de libération dans l'isothermaliseur à l'instant auquel la libération du fluide est arrêtée et une pression après stabilisation dans l'isothermaliseur après un intervalle d'un temps prédéterminé ; et obtenant la température du fluide à l'instant d'arrêt de libération du fluide à partir de la pression à l'instant d'arrêt de libération, de la pression après stabilisation et de la température atmosphérique.

5.  Appareil de mesure de débit (1) pour mesurer les caractéristiques d'écoulement d'un composant de pression de fluide (100), comprenant :

    un isothermaliseur (2) qui supprime la variation de température d'un fluide circulant dans celui-ci ;
    un dispositif de détection de pression (5) qui détecte la pression dans l'isothermaliseur ; et
    une unité de calcul (6) qui calcule le débit du fluide circulant dans le composant de pression de fluide (100) à partir d'un signal de détection de pression obtenu par le dispositif de détection de pression, **caractérisé en ce que** l'unité de calcul comprend : un calculateur de coefficient de transfert thermique (61) qui obtient la fonction du coefficient de transfert thermique du fluide par rapport au temps sur la base de la réponse en température du fluide dans l'isothermaliseur par rapport au temps à un instant auquel le fluide est fourni de l'isothermaliseur au composant de pression de fluide ; et un calculateur de débit (62) qui calcule le débit du fluide circulant dans le composant de pression de fluide (100) à partir d'une réponse en pression du fluide par rapport au temps en utilisant la fonction du coefficient de transfert thermique obtenue par le calculateur de coefficient de transfert thermique.

**6.** Appareil de mesure de débit selon la revendication 5, dans lequel le calculateur de coefficient de transfert thermique mémorise, en tant que fonction h(t) pour obtenir le coefficient de transfert thermique du fluide par rapport au temps, l'équation $h(t) = h_0 e^{-at}$, où $h_0$ est le coefficient de transfert thermique à la chute de température maximum ; a est un facteur de correction ; et t est le temps.

**7.** Appareil de mesure de débit selon la revendication 6, dans lequel, le calculateur de débit mémorise l'équation

$$G = \frac{V}{R\theta_a} \bullet \frac{dP}{dt} + \frac{S_h \Delta\theta}{\theta_a C_p} \bullet h(t)$$ pour calculer le débit massique G du fluide circulant dans le composant de pression de fluide, où P est la pression du fluide dans l'isothermaliseur ; V est le volume du fluide dans l'isothermaliseur ; i R est la constante du gaz ; $\theta_a$ est la température atmosphérique ; $S_h$ est l'aire de transfert thermique de l'isothermaliseur ; $C_p$ est une chaleur spécifique à pression constante ; et $\Delta\theta$ est la chute de température maximum.

EP 1 847 812 B1

# FIG.1

# FIG.2

# FIG.3

# FIG.4

# FIG.5

# FIG.6

# FIG.7

# FIG.8

| | C | DIFFERENCE FROM FIRST COMPARISON EXAMPLE | b | DIFFERENCE FROM FIRST COMPARISON EXAMPLE |
|---|---|---|---|---|
| EXAMPLE | 0.726 | −0.4% | 0.254 | −0.068 |
| FIRST COMPARISON EXAMPLE | 0.729 | 0 | 0.322 | 0 |
| SECOND COMPARISON EXAMPLE | 0.762 | 4.5% | 0.146 | −0.176 |

**EP 1 847 812 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2887360 B

- WO 9519549 A